# DEMANDE DE BREVET EUROPEEN

(11) **EP 4 124 595 A1**
(43) Date de publication de la demande: **01.02.2023**
(21) Numéro de dépôt: 22186317.8
(22) Date de dépôt: 21.07.2022
(51) Int. Cl.: B65G 53/10, B65G 53/58, E04B 1/76, E04F 21/12

(54) **MACHINE DE SOUFFLAGE**

(30) Priorité: 26.07.2021 FR 2108065
(71) Demandeur: SAINT-GOBAIN ISOVER, 92400 Courbevoie (FR)
(72) Inventeur: LUIS, David, 60290 RANTIGNY (FR)
(74) Mandataire: Ex Materia

(57) **Abrégé**

L'invention concerne une machine de soufflage d'un produit isolant en vrac comprenant au moins une base et un tuyau (4) de transport du produit isolant, la base comprenant au moins une entrée d'air, une entrée du produit isolant en vrac et une sortie connectée au tuyau (4), le tuyau (4) comprenant au moins une paroi cylindrique (20) qui délimite un espace (22) configuré pour le passage du produit isolant en vrac et de l'air, la machine de soufflage comprenant au moins un orifice d'évacuation (32), formé au travers de la paroi cylindrique (20) du tuyau (4), l'au moins un orifice d'évacuation (32) étant configuré pour autoriser le passage d'air vers l'extérieur du tuyau (4) et bloquer le passage du produit isolant en vrac.

## Description

La présente invention concerne une machine de soufflage pour un produit isolant en vrac, tel que de la laine de verre, laine de roche, ouate de cellulose, fibres de coton ou tous autres matériaux similaires, la machine de soufflage comprenant un tuyau de projection dudit produit isolant en vrac.

Il est courant d'utiliser des produits isolants en vrac afin d'isoler une habitation, et plus particulièrement pour isoler des combles d'une telle habitation. L'utilisation d'une machine de soufflage permet alors de faciliter la projection du produit isolant dans l'habitation, en soufflant le produit isolant à partir d'air sous pression et à haut débit. De manière plus précise, le produit isolant est projeté au moyen du tuyau, fluidiquement relié à une base de la machine de soufflage au sein de laquelle est mélangé l'air et ledit produit isolant en vrac. La pression et le débit de l'air dans le tuyau doivent alors être suffisamment importants pour pouvoir transporter le produit isolant depuis la base de la machine de soufflage jusqu'à une sortie du tuyau.

Ce besoin d'une pression d'air importante pour réaliser la projection de produit isolant doit toutefois être pondéré par les inconvénients qu'une projection de produits isolants trop puissante peut générer, parmi lesquels, sans que cela soit exhaustif, le soulèvement de poussières lorsque le produit isolant en vrac est projeté dans des combles d'habitation et/ou le compactage trop important du produit isolant en vrac pouvant entraîner une isolation moins efficace.

La présente invention a pour but de palier aux inconvénients évoqués ci-dessus en proposant des moyens simples, maniables et applicables aux machines de soufflage existantes, permettant notamment d'améliorer la qualité, et notamment l'homogénéité, du produit isolant en vrac projeté dans la zone à isoler de l'habitation.

Dans ce contexte, l'invention porte sur une machine de soufflage d'un produit isolant en vrac comprenant au moins une base et un tuyau de transport du produit isolant, la base comprenant au moins une entrée d'air, une entrée du produit isolant en vrac et une sortie connectée au tuyau, le tuyau comprenant au moins une paroi cylindrique configurée pour le passage du produit isolant en vrac et de l'air entre une première ouverture formée à une première extrémité du tuyau, solidaire de la sortie de la base, et une deuxième ouverture formée à une deuxième extrémité du tuyau, opposée à la première extrémité suivant une direction d'allongement principal longitudinale du tuyau, la machine de soufflage comportant au moins un orifice d'évacuation, distinct de la première ouverture et de la deuxième ouverture, formé au travers de la paroi cylindrique du tuyau, l'au moins un orifice d'évacuation étant configuré pour autoriser le passage d'air vers l'extérieur du tuyau et bloquer le passage du produit isolant en vrac.

La machine de soufflage peut être utilisée pour projeter le produit isolant en vrac, par exemple de la laine de verre, dans une zone à isoler d'une habitation, par exemple des combles. De manière plus précise, le tuyau de la machine de soufflage permet la pulvérisation d'un mélange fait d'air sous pression et de produit isolant en vrac dans la zone à isoler, le mélange étant opéré dans la base de la machine de soufflage. De manière plus précise, l'air sous pression dans le tuyau permet de diriger le produit isolant en vrac depuis la première ouverture du tuyau jusqu'au moins la deuxième ouverture formant la sortie du tuyau, en direction de la zone à isoler de l'habitation, et la deuxième ouverture est configurée pour autoriser le passage vers l'extérieur de l'air et du produit isolant en vrac.

L'au moins un orifice d'évacuation permet alors le passage d'air depuis l'espace du tuyau vers l'extérieur dudit tuyau afin de diminuer la pression et le débit d'air dans le tuyau et ainsi ajuster le débit de sortie du mélange sans pour autant modifier le débit d'air dans la base de la machine de soufflage. A cet effet, l'au moins un orifice d'évacuation est configuré pour déboucher aussi bien sur l'intérieur du tuyau que sur l'extérieur du tuyau. Le fait de diminuer le débit de sortie permet notamment d'éviter le soulèvement de poussières pouvant être présentes dans la zone à isoler, et/ou d'éviter que le produit isolant en vrac projeté ne soit trop compacté dans l'isolant final, sous l'effet d'une pression trop importante de l'air projeté simultanément au produit isolant en vrac et l'invention permet d'obtenir ces avantages sans diminuer le débit d'air en entrée de la machine de soufflage, ce qui aurait pour effet de faire circuler le produit isolant en vrac au sein du tuyau avec une vitesse insuffisante pour une projection correcte en bout de tuyau.

Selon une caractéristique de l'invention, le tuyau comprend au moins un moyen d'obturation du au moins un orifice d'évacuation, le moyen d'obturation étant mobile le long de la direction longitudinale du tuyau.

On comprend que le moyen d'obturation est mobile entre une position de recouvrement de l'orifice d'évacuation dans laquelle il permet de bloquer le passage d'air au travers de l'orifice d'évacuation et une position de dégagement dans laquelle l'air peut sortir du tuyau à travers l'orifice d'évacuation. Le déplacement du moyen d'obturation permet de contrôler la pression et le débit de l'air en fonction du débit du mélange d'air et de produit isolant souhaité en sortie du tuyau, au niveau de sa deuxième ouverture. Le moyen d'obturation peut être par exemple un manchon apte à coulisser longitudinalement autour de la paroi cylindrique du tuyau.

Selon une caractéristique de l'invention, l'orifice d'évacuation présente une section de passage inférieure ou égale à 5mm.

On comprend qu'une telle dimension de la section de passage de l'orifice d'évacuation, par exemple le diamètre de l'orifice d'évacuation lorsque celui-ci présente une forme circulaire, permet de limiter le passage de produit isolant en vrac au travers dudit orifice d'évacuation, les fibres de produit isolant étant majoritairement d'une dimension supérieure à 5mm. Un tel dimensionnement de l'orifice d'évacuation forme alors un moyen de blocage du produit isolant, qui permet par ailleurs le passage de l'air sous pression vers l'extérieur du tuyau.

Selon une caractéristique de l'invention, un dispositif de filtration est disposé en recouvrement de l'au moins un orifice d'évacuation.

Le dispositif de filtration participe à limiter le passage de produit isolant au travers de l'orifice d'évacuation tout en autorisant le passage d'air à travers le tuyau. Un tel dispositif de filtration peut être disposé en recouvrement d'un orifice d'évacuation dont la section de passage est inférieure ou égale à 5mm afin de renforcer l'effet de blocage du passage de produit isolant au travers dudit orifice d'évacuation.

Selon une caractéristique de l'invention, le dispositif de filtration est une grille disposée contre la paroi cylindrique. La grille peut notamment comprendre une pluralité de trous présentant des sections de passage inférieures ou égales à 5mm. De manière avantageuse, le dispositif de filtration est réalisé dans un matériau flexible de telle sorte que la grille peut épouser la forme de la paroi cylindrique du tuyau.

Selon une caractéristique de l'invention, le dispositif de filtration est disposé dans un espace délimité au sein de la paroi cylindrique. En d'autres termes, le dispositif de filtration est plaqué contre la face interne de la paroi cylindrique. Dans une telle disposition, le dispositif de filtration ne bloque pas le coulissement du moyen d'obturation le long de la paroi cylindrique du tuyau.

Selon un exemple de l'invention, le dispositif de filtration s'étend sur toute une dimension longitudinale du tuyau. En d'autres termes, le dispositif de filtration s'étend tout le long de la paroi cylindrique délimitant le tuyau et notamment tout le long de la face interne de la paroi cylindrique. Par ailleurs, le dispositif de filtration peut être disposé dans l'espace du tuyau de telle sorte que subsiste un espacement entre ledit dispositif de filtration et la paroi cylindrique, l'espacement pouvant présenter une dimension comprise entre 2mm et 4mm prise le long d'une droite perpendiculaire à la direction longitudinale du tuyau. On tire avantage d'une telle caractéristique du dispositif de filtration en ce qu'elle facilite l'insertion et le maintien de ce dernier dans l'espace du tuyau.

Selon une caractéristique de l'invention, l'au moins un orifice d'évacuation s'étend dans la paroi cylindrique le long d'un axe d'allongement perpendiculaire à la direction longitudinale du tuyau.

En d'autres termes, l'orifice d'évacuation est un orifice droit, c'est-à-dire défini par une forme cylindrique autour d'un axe de révolution qui est sensiblement perpendiculaire à la direction de circulation de l'air et du produit isolant en vrac au sein du conduit délimité par la paroi cylindrique du tuyau.

Selon une alternative de l'invention, l'au moins un orifice d'évacuation s'étend dans la paroi cylindrique le long d'un axe d'allongement incliné par rapport à la direction longitudinale du tuyau. Plus particulièrement, l'orifice d'évacuation est incliné de telle sorte qu'il s'étend, depuis l'intérieur vers l'extérieur du tuyau, en direction de la première extrémité du tuyau.

En d'autres termes, dans cette alternative, l'orifice d'évacuation est incliné dans la paroi cylindrique de sorte que l'air le traversant circule dans un sens sensiblement opposé au sens de circulation du mélange d'air et de produit isolant dans l'espace du tuyau. Une telle inclinaison permet de limiter le passage du produit isolant en vrac au travers de l'orifice d'évacuation.

Selon une caractéristique de l'invention, l'au moins un orifice d'évacuation est plus proche de la deuxième extrémité du tuyau que de la première extrémité. Une telle disposition de l'orifice d'évacuation sur le tuyau permet de conserver une pression et un débit d'air suffisant dans l'espace délimité par la paroi cylindrique pour projeter le mélange en dehors du tuyau par la deuxième ouverture, une partie de l'air n'étant évacuée qu'à l'approche de ladite deuxième extrémité.

Selon une caractéristique de l'invention, la machine de soufflage comprend une pluralité d'orifices d'évacuation, les orifices d'évacuation étant regroupés sur un tronçon du tuyau apte à être obturé en intégralité par le moyen d'obturation.

Selon une caractéristique de l'invention, la base comprend un canal de circulation d'air et un canal de circulation du produit isolant en vrac respectivement connectés à l'entrée d'air et à l'entrée du produit isolant en vrac, le canal de circulation d'air et le canal de circulation du produit isolant en vrac étant en communication fluidique avec la première ouverture du tuyau. On comprend que chacun du produit isolant en vrac et de l'air est apporté de manière séparée dans la base de la machine de soufflage avant de former un mélange circulant dans le tuyau. Un dispositif de ventilation peut alors être positionné dans le canal de circulation d'air afin de faire circuler l'air sous pression et à haut débit dans le canal de circulation d'air et à l'intérieur du tuyau.

Selon une caractéristique de l'invention, un organe de contrôle du débit est positionné entre les canaux de circulation et la première ouverture du tuyau.

L'organe de contrôle du débit permet notamment d'ajuster le débit du mélange d'air et de produit isolant en amont de son entrée dans le tuyau par la première ouverture de ce dernier.

L'invention porte également sur un procédé d'isolation d'une zone à isoler, par exemple les combles d'un bâtiment, dans lequel un produit isolant en vrac est soufflé par une machine de soufflage selon l'une quelconque des caractéristiques précédentes.

Le produit isolant en vrac peut être, par exemple et de manière non limitative, de la laine minérale telle que de la laine de verre ou de la laine de roche. De préférence, le produit isolant en vrac est de la laine de verre.

Selon une caractéristique du procédé de l'invention, la base de la machine de soufflage est alimentée en air dans une première étape, via l'entrée d'air et à un débit donné, l'air étant mélangé au produit isolant en vrac au cours d'étapes ultérieures pour circuler ensemble dans le tuyau en direction de la deuxième ouverture de celui-ci, l'utilisateur étant apte à configurer l'orifice d'évacuation d'air pour évacuer une quantité donnée d'air entre la base et la deuxième ouverture.

D'autres caractéristiques, détails et avantages de l'invention ressortiront plus clairement à la lecture de la description donnée ci-après à titre indicatif en relation avec des dessins dans lesquels :
[Fig 1] est une vue schématique en coupe d'une machine de soufflage selon l'invention comprenant au moins une base et un tuyau comprenant au moins un orifice d'évacuation ;
[Fig 2] est une vue schématique du tuyau de la machine de soufflage de la figure 1, le tuyau comprenant au moins un orifice d'évacuation ;
[Fig 3] est une vue schématique rapprochée de l'au moins un orifice d'évacuation du tuyau de la figure 2 selon un premier mode de réalisation ;
[Fig 4] est une vue schématique rapprochée de l'au moins un orifice d'évacuation du tuyau de la figure 2 selon un deuxième mode de réalisation ;
[Fig 5] est une vue schématique rapprochée d'un moyen d'obturation de l'au moins un orifice d'évacuation du tuyau de la machine de soufflage selon l'invention ;
[Fig 6] est une vue schématique rapprochée d'un module comprenant l'au moins un orifice d'évacuation, rapporté entre une première partie d'une paroi cylindrique du tuyau et une deuxième partie de la paroi cylindrique du tuyau.

Il faut tout d'abord noter que si les figures exposent l'invention de manière détaillée pour sa mise en œuvre, ces figures peuvent bien entendu servir à mieux définir l'invention, le cas échéant. Il est également à noter que ces figures n'exposent que des exemples de réalisation de l'invention. Enfin, les mêmes repères désignent les mêmes éléments dans l'ensemble des figures.

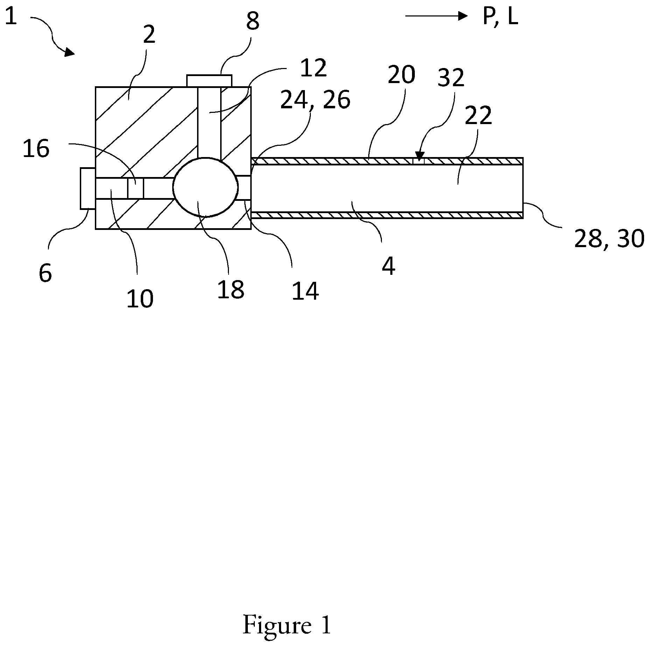

La figure 1 illustre une machine de soufflage 1 d'un produit isolant en vrac selon l'invention, comprenant au moins une base 2 et un tuyau 4 de transport du produit isolant. La base 2 comprend notamment au moins une entrée d'air 6 et une entrée de produit isolant 8 distinctes l'une de l'autre, l'entrée de produit isolant 8 étant reliée à un réservoir de produit isolant en vrac disposé à l'extérieur de la machine de soufflage 1 et non visible ici. Un canal de circulation d'air 10 et un canal de circulation du produit isolant 12 s'étendent chacun dans la base 2 de la machine de soufflage 1, respectivement depuis l'entrée d'air 6 et l'entrée de produit isolant 8 et sont reliés à une sortie 14 de la base 2 connectée au tuyau 4.

Afin de permettre la circulation de l'air à haut débit dans le canal de circulation d'air 10, ce dernier peut selon un exemple de l'invention comprendre un dispositif de ventilation 16 assurant la circulation de l'air depuis l'entrée d'air 6 et au moins jusqu'à la sortie 14 de la base 2. Toujours selon l'exemple de l'invention de la figure 1, un organe de contrôle du débit 18 est disposé entre le canal de circulation d'air 10, le canal de circulation du produit isolant 12 et la sortie 14 de la base 2 et cet organe de contrôle du débit peut être configuré par l'utilisateur de telle sorte à mélanger l'air et le produit isolant dans des proportions données et adapter la qualité de l'isolation pouvant être obtenue par la projection du produit isolant en vrac dans le tuyau 4.

Le tuyau 4 comprend une paroi cylindrique 20 qui délimite un espace 22 configuré pour le passage du produit isolant et de l'air. L'espace 22 s'étend entre une première ouverture 24, formée à une première extrémité 26 du tuyau 4 qui est solidaire de la sortie 14 de la base 2, et une deuxième ouverture 28, formée à une deuxième extrémité 30 du tuyau 4, opposée à la première extrémité 26 suivant une direction d'allongement principal P du tuyau 4, ici longitudinale L.

Le canal de circulation d'air 10 et le canal de circulation du produit isolant 12 sont fluidiquement reliés à la première ouverture 24 du tuyau 4, pour permettre la présence combinée d'air et de produit isolant dans le tuyau, et la deuxième ouverture 28 du tuyau 4 forme une extrémité de sortie du mélange d'air et du produit isolant en vrac de la machine de soufflage 1.

Le dispositif de ventilation 16 présent dans le canal de circulation d'air 10 est configuré et dimensionné pour pousser le mélange formé de l'air et du produit isolant, sous pression, au moins jusqu'à la deuxième ouverture 28 du tuyau 4, de telle sorte à faciliter la pulvérisation du mélange dans une zone à isoler de l'habitation.

Selon un exemple de l'invention, le tuyau 4 présente une dimension D, prise suivant la direction longitudinale L, comprise entre 10m et 20m. Pour obtenir une machine de soufflage d'une plus grande dimension longitudinale, il est alors possible de disposer plusieurs tuyaux 4 les uns à la suite des autres. Par ailleurs, un diamètre du tuyau 4 peut être compris entre 50mm et 120mm selon l'invention. Le tuyau 4 peut être fait par exemple d'une matière plastique. Il convient de noter que ces valeurs de dimension et de diamètre sont données à titre d'exemples et sont non limitatives, un tuyau selon l'invention pouvant présenter une dimension et un diamètre avec des valeurs inférieures ou supérieures aux valeurs mentionnées.

Selon l'invention, la machine de soufflage 1 comprend au moins un orifice d'évacuation 32, distinct de la première ouverture 24 et de la deuxième ouverture 28, formé au travers de la paroi cylindrique 20 du tuyau 4. De manière plus précise, l'orifice d'évacuation 32 forme un passage entre l'espace 22 interne au tuyau 4, où circule le mélange d'air et de produit isolant, et un environnement extérieur à la machine de soufflage 1. En d'autres termes, une partie du flux circulant au sein du tuyau est apte à s'échapper du tuyau à travers l'orifice d'évacuation.

L'orifice d'évacuation 32 est configuré pour autoriser le passage d'air vers l'extérieur du tuyau 4, tout en bloquant le passage du produit isolant en vrac vers l'extérieur dudit tuyau 4. En d'autres termes, l'orifice d'évacuation 32 permet l'évacuation d'une partie de l'air circulant dans l'espace 22 au sein du tuyau tout en canalisant le produit isolant au sein du tuyau 4 pour l'amener de la première ouverture 24 jusqu'à la deuxième ouverture 28.

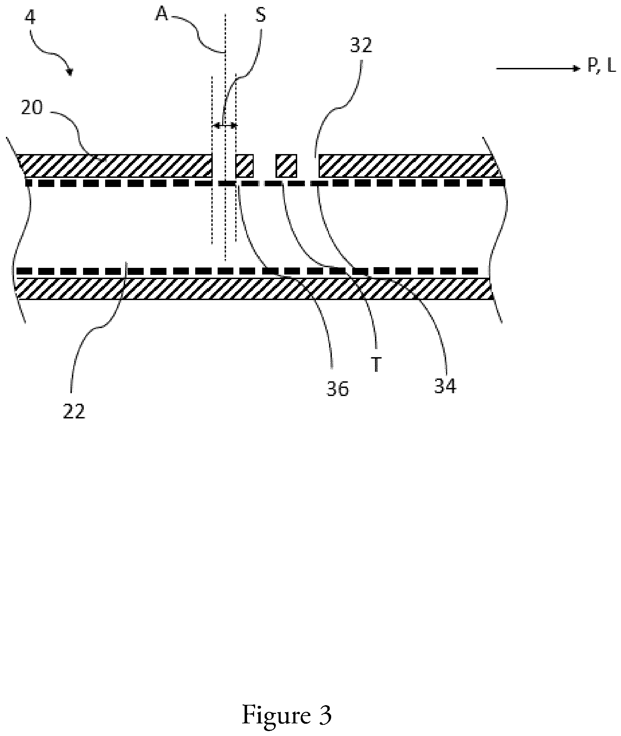

L'orifice d'évacuation 32 peut être défini par une forme cylindrique autour d'un axe d'allongement A, ou axe de révolution. Selon un premier exemple de l'invention visible à la figure 3, l'orifice d'évacuation 32 peut consister en un orifice dit droit, c'est-à-dire avec un axe d'allongement A qui est perpendiculaire à la direction longitudinale L du tuyau 4.

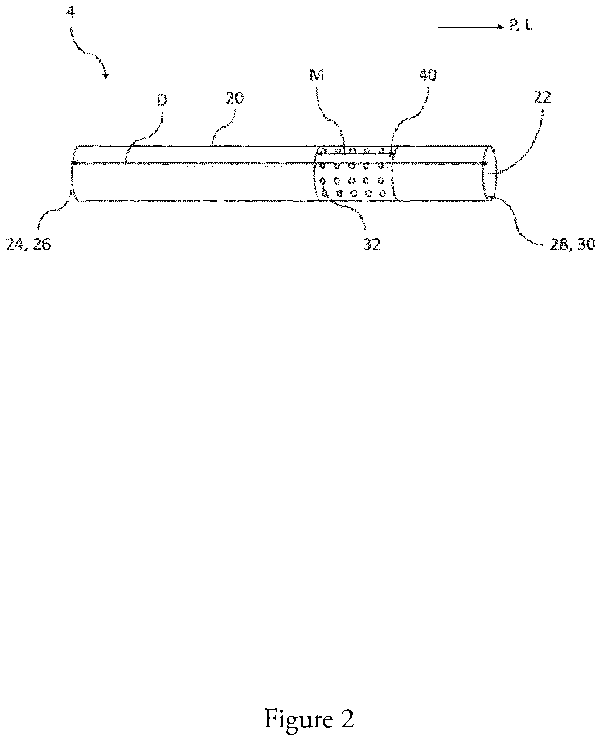

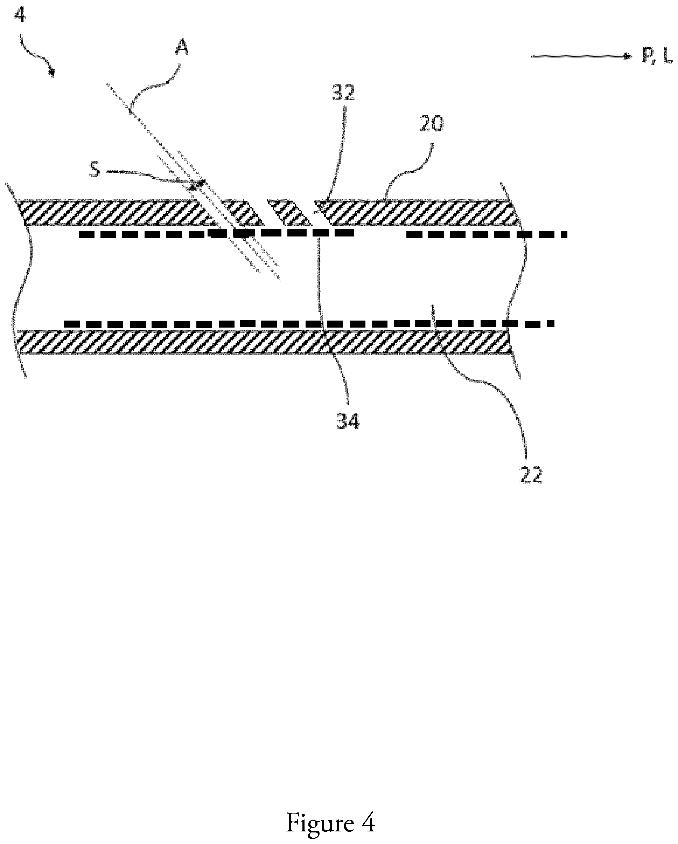

Selon un deuxième exemple de l'invention visible à la figure 4, l'orifice d'évacuation 32 peut être incliné, c'est-à-dire qu'il s'étend dans la paroi cylindrique 20 de telle sorte que son axe d'allongement A est incliné par rapport à la direction longitudinale L du tuyau 4 suivant un angle compris entre 10° et 80°. Par ailleurs, dans cet exemple de l'invention, l'orifice d'évacuation 32 est incliné à contre-courant du flux d'air et de produit isolant en vrac. En d'autres termes, l'orifice d'évacuation s'étend, depuis l'espace 22 vers l'environnement extérieur, c'est-à-dire depuis l'intérieur vers l'extérieur du tuyau, en direction de la première extrémité du tuyau 4. On tire avantage d'une telle configuration à contre-courant en ce qu'elle permet de limiter l'occlusion de l'orifice d'évacuation 32 par le produit isolant en vrac lors de sa circulation dans l'espace 22 du tuyau 4, ledit produit isolant circulant depuis la première ouverture 24 vers la deuxième ouverture 28 du tuyau 4, visible à la figure 2.

Indépendamment du premier exemple et du deuxième exemple de réalisation de l'orifice d'évacuation 32, ce dernier peut présenter une section de passage S inférieure ou égale à 5mm. La section de passage S de l'orifice d'évacuation 32 est prise dans un plan perpendiculaire à la direction d'allongement A de l'orifice d'évacuation. Un tel dimensionnement de la section de passage S de l'orifice d'évacuation 32 permet de limiter le passage du produit isolant en vrac dont une section et/ou un diamètre est habituellement de l'ordre de 5mm.

Un dispositif de filtration 34 peut être disposé en recouvrement de l'au moins un orifice d'évacuation 32 pour permettre de limiter le passage du produit isolant au travers de l'orifice d'évacuation 32. Un tel dispositif de filtration 34 peut prendre la forme d'une grille comprenant une pluralité de trous 36 d'une section de passage T permettant le passage d'air tout en bloquant le passage du produit isolant en vrac. A titre d'exemple, la section de passage T de chacun de ces trous 36 peut être inférieure ou égale à 5mm.

Le dispositif de filtration 34 est disposé contre une face de la paroi cylindrique 20, en recouvrant au moins partiellement l'orifice d'évacuation 32. A cet effet, le dispositif de filtration 34 est réalisé dans un matériau flexible permettant de donner au dispositif de filtration une forme partiellement cylindrique de courbure identique à celle de la paroi cylindrique.

Il convient de noter que le dispositif de filtration 34 peut être disposé dans l'espace 22 du tuyau 4 en combinaison avec un orifice d'évacuation 32 dont la section de passage S est inférieure ou égale à 5mm, une telle combinaison renforçant l'effet limitatif du passage du produit isolant au travers dudit orifice d'évacuation 32.

Tel que cela est notamment visible sur la figure 3, le dispositif de filtration est disposé dans l'espace 22, au sein de la paroi cylindrique 20 définissant le tuyau 4. Un tel positionnement du dispositif de filtration, contre la face interne de la paroi cylindrique, permet notamment de ne pas former de saillie sur la face externe de la paroi cylindrique du tuyau, à l'extérieur de celui-ci, et donc de ne pas bloquer la translation d'un moyen d'obturation 38.

Tel que visible aux figures 3 et 4, le dispositif de filtration 34 peut être disposé dans l'espace 22 tout le long de la paroi cylindrique 20 du tuyau 4, c'est-à-dire sur sensiblement toute la dimension longitudinale entre la première ouverture 24 formée à la première extrémité 26 du tuyau 4 et la deuxième ouverture 28 formée à la deuxième extrémité 30 du tuyau 4, de manière à former un manchon cylindrique dans l'espace 22 dudit tuyau 4. Un tel dimensionnement du dispositif de filtration 34 permet de s'assurer du bon recouvrement de chacun des orifices d'évacuation et de faciliter le positionnement et le maintien du dispositif de filtration 34 dans l'espace 22 du tuyau 4. Plus particulièrement, le dispositif de filtration s'étend tout le long de la face interne de cette paroi cylindrique 20.

Par ailleurs, un espacement peut être ménagé entre la paroi cylindrique 20 et le dispositif de filtration 34 de telle sorte que ces derniers ne sont pas en contact l'un de l'autre. Selon un exemple non limitatif de l'invention, l'espacement peut présenter une dimension, mesurée perpendiculairement à la face interne de la paroi cylindrique, comprise entre 2mm et 4mm.

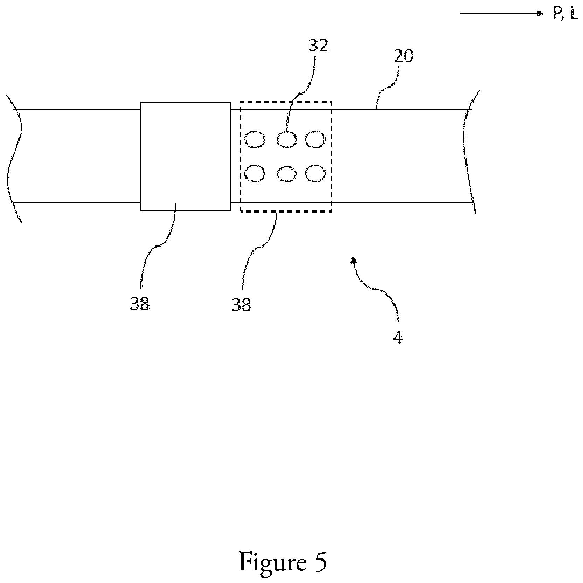

Le moyen d'obturation 38 de l'au moins un orifice d'évacuation 32 peut, selon un exemple non limitatif de l'invention visible à la figure 5, prendre la forme d'un manchon 38 apte à coulisser le long du tuyau 4. De manière plus précise, le moyen d'obturation 38 est mobile en translation longitudinale L le long du tuyau 4 entre une première position de dégagement, représentée en traits pleins sur la figure 5 et qui est telle que les orifices d'évacuation ne sont pas recouverts par le moyen d'obturation et peuvent laisser passer l'air vers l'extérieur du tuyau, et une deuxième position de recouvrement, représentée en traits pointillés sur la figure 5 et qui est telle que l'ensemble des orifices d'évacuation est recouvert et que de l'air ne peut pas sortir du tuyau autrement que par la deuxième extrémité, avec le produit isolant en vrac. On comprend que le moyen d'obturation 38 a pour fonction de clôturer extérieurement l'orifice d'évacuation 32 afin de bloquer le passage de l'air au travers de ce dernier. La translation du moyen d'obturation 38 peut notamment être contrôlée manuellement par un utilisateur de la machine de soufflage 1 ou encore via des moyens électroniques de commande à distance, non visibles. Le cas échéant, le moyen d'obturation peut prendre une position intermédiaire, entre la position de dégagement et la position de recouvrement, dans laquelle seulement une partie des orifices d'évacuation est dégagée. Il est ainsi possible de piloter la quantité d'air destinée à sortir du tuyau en amont de la deuxième extrémité et donc de faire varier le débit d'air en sortie du tuyau sans par ailleurs modifier le débit d'air en entrée de la machine de soufflage.

Selon une caractéristique de l'invention, l'orifice d'évacuation 32 est formé dans la paroi cylindrique 20 du tuyau 4 de telle sorte qu'il soit plus proche de la deuxième extrémité 30 du tuyau 4 que de la première extrémité 26. En d'autres termes, l'orifice d'évacuation 32 est plus proche de la sortie du mélange d'air et de produit isolant en vrac du tuyau 4 que de son entrée dans ledit tuyau 4, afin que la pression et le débit de circulation dans l'espace 22 du tuyau 4 restent suffisants pour amener le mélange depuis la première ouverture 24 au moins jusqu'à la deuxième ouverture 28 du tuyau 4. On permet ainsi une évacuation efficace d'une partie de l'air circulant dans l'espace 22 du tuyau 4 tout en maintenant une projection suffisante du mélange en sortie de tuyau 4.

Il convient de considérer que les caractéristiques structurelles et fonctionnelles de l'orifice d'évacuation 32 s'appliquent *mutatis mutandis* à une pluralité d'orifices d'évacuation 32. De manière plus précise, le tuyau 4 peut comprendre la pluralité d'orifices d'évacuation 32 formés sur sa paroi cylindrique 20, lesdits orifices d'évacuation 32 étant regroupés sur un tronçon 40 du tuyau 4, visible à la figure 2. Plus particulièrement, les orifices d'évacuation 32 sont regroupés sur le tronçon 40 du tuyau 4 qui est apte à être obturé en intégralité ou partiellement par le moyen d'obturation 38 précédemment décrit à la figure 5. Chacun des orifices d'évacuation 32 peut présenter une section de passage S inférieure ou égale à 5mm et/ou que chacun desdits orifices d'évacuation 32 est recouvert du dispositif de filtration décrit précédemment. On définit alors une dimension d'allongement M du tronçon 40 comprenant la pluralité d'orifices d'évacuation 32, prise le long de la direction longitudinale L du tuyau 4, et on agence le tronçon 40 de telle sorte que sa dimension d'allongement M soit strictement inférieure à une moitié de la dimension D du tuyau 4 précédemment définie. On comprend notamment qu'une telle caractéristique permet de concentrer l'évacuation de l'air en dehors de l'espace 22 du tuyau 4, sur le tronçon 40 localisé au niveau de la deuxième extrémité 30 du tuyau 4 afin de conserver une pression et un débit suffisants de l'air depuis la première ouverture 24 du tuyau 4, nécessaire à la projection efficace du mélange d'air et de produit isolant sur la zone à isoler de l'habitation.

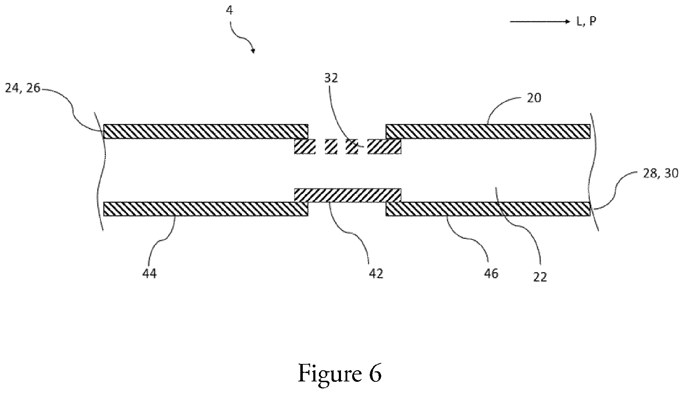

Selon un autre mode de réalisation de l'invention visible à la figure 6, l'au moins un orifice d'évacuation 32 peut être localisé sur un module 42 distinct de la paroi cylindrique 20 du tube 4. De manière plus précise, un module 42 cylindrique comprenant l'au moins un orifice d'évacuation 32 peut être disposé entre une première partie 44 de la paroi cylindrique 20 comprenant la première ouverture 24, et une deuxième partie 46 de la paroi cylindrique 20 comprenant la deuxième ouverture 28. On comprend alors que la première partie 44 de la paroi cylindrique 20, le module 42 et la deuxième partie 46 de la paroi cylindrique 20 participent à former l'espace 22 du tuyau 4. On comprend par ailleurs que la jonction entre le module 42, la première partie 44 de la paroi cylindrique 20 et la deuxième partie 46 de la paroi cylindrique 20 est étanche de telle sorte à autoriser le passage du produit isolant en vrac uniquement dans l'espace 22 du tuyau 4, et le passage de l'air uniquement dans l'espace 22 du tuyau 4 et l'orifice d'évacuation 32. Il convient de considérer que le module 42 peut également comprendre la pluralité d'orifices d'évacuation 32 et que l'ensemble des caractéristiques structurelles et fonctionnelles de l'au moins un orifice d'évacuation 32 s'appliquent *mutatis mutandis* à l'au moins la pluralité d'orifices d'évacuation 32 formée sur le module 42.

Un procédé d'isolation d'un bâtiment dans lequel un produit isolant en vrac est soufflé par la machine de soufflage 1 va maintenant être décrit au moyen des figures 1 à 5.

Le procédé d'isolation comprend une première étape au cours de laquelle la base 2 de la machine de soufflage 1 est alimentée en air au niveau de l'entrée d'air 6 et au moyen du dispositif de ventilation 16 présent dans le canal de circulation d'air 10. Au cours de cette première étape, l'utilisateur détermine un débit d'alimentation d'air qui conditionne le débit d'air entrant dans la base et entrant dans le tuyau au niveau de la première extrémité 26. Au cours d'une deuxième étape du procédé, la base 2 de la machine de soufflage 1 est alimentée en produit isolant en vrac via l'entrée du produit isolant 8 formée dans la base 2. Il convient de noter que ces deux premières étapes du procédé peuvent être réalisées simultanément ou successivement, et ce dans quelque ordre que ce soit.

Lors d'une troisième étape du procédé, l'air circule dans le canal de circulation d'air 10 de la base 2 jusqu'à la première ouverture 24 du tuyau 4, au moyen du dispositif de ventilation 16. On comprend par ailleurs que lors de la troisième étape, le produit isolant en vrac traverse le canal de circulation du produit isolant 12 jusqu'à la première ouverture 24 du tuyau 4. L'utilisateur peut être amené à régler l'organe de contrôle de débit 18, pour convenir d'une teneur en produit isolant en vrac pour un débit d'air donné, et donc permettre l'obtention en sortie de la machine de soufflage d'un isolant plus ou moins compact.

A une quatrième étape, le mélange formé par l'air et le produit isolant en vrac est projeté dans l'espace 22 du tuyau 4 au moyen de l'air circulant à haut débit et mis sous pression par le dispositif de ventilation 16. Le produit isolant en vrac est ainsi transporté depuis la première ouverture 24 du tuyau 4 vers sa deuxième ouverture 28 afin d'être pulvérisé dans une zone du bâtiment à isoler. On comprend que lors de la quatrième étape du procédé, l'orifice d'évacuation 32 permet d'évacuer une partie de l'air circulant dans l'espace 22 en dehors du tuyau 4 afin de limiter le débit du mélange en sortie du tuyau par la deuxième ouverture 28, permettant à l'utilisateur de mieux contrôler la répartition du produit isolant dans la zone à isoler de l'habitation.

Au cours de cette quatrième étape, l'utilisateur qui dirige le tuyau en direction de la zone à isoler peut recouvrir les orifices d'évacuation, et dans ce cas intégralement ou partiellement, pour réduire ponctuellement le débit d'air en sortie de la machine de soufflage et donc la puissance de projection du produit isolant en vrac. L'utilisateur peut ainsi ajuster le fonctionnement de la machine de soufflage sans pour autant devoir modifier le débit d'air en entrée de la machine de soufflage.

Telle qu'elle vient d'être décrite, aussi bien par la description de la machine de soufflage que par la description du procédé d'utilisation, l'invention permet, par des moyens simples à mettre en œuvre, de proposer une opération de soufflage de produit isolant en vrac qui puisse s'adapter à des environnements confinés dans lesquels le produit isolant en vrac doit être déposé en évitant de soulever trop de poussière lors de la projection et/ou qui puisse proposer des isolations dans lesquelles le produit isolant en vrac n'est pas trop compacté sous l'effet d'une pression d'air trop importante.

L'invention telle qu'elle vient d'être décrite ne saurait toutefois se limiter aux moyens et configurations exclusivement décrits et illustrés, et s'applique également à tous moyens ou configurations, équivalents et à toute combinaison de tels moyens ou configurations.

## Revendications

1. Machine de soufflage (1) d'un produit isolant en vrac comprenant au moins une base (2) et un tuyau (4) de transport du produit isolant, la base (2) comprenant au moins une entrée d'air (6), une entrée du produit isolant (8) en vrac et une sortie (14) connectée au tuyau (4), le tuyau (4) comprenant au moins une paroi cylindrique (20) configurée pour le passage du produit isolant en vrac entre une première ouverture (24) formée à une première extrémité (26) du tuyau (4), solidaire de la sortie (14) de la base (2), et une deuxième ouverture (28) formée à une deuxième extrémité (30) du tuyau (4), opposée à sa première extrémité (26) suivant une direction d'allongement principal (P) longitudinale (L) du tuyau (4), la machine de soufflage (1) comportant au moins un orifice d'évacuation (32), distinct de la première ouverture (24) et de la deuxième ouverture (28), formé au travers de la paroi cylindrique (20) du tuyau (4), l'au moins un orifice d'évacuation (32) étant configuré pour autoriser le passage d'air vers l'extérieur du tuyau (4) et bloquer le passage du produit isolant en vrac.

2. Machine de soufflage (1) selon la revendication précédente, dans laquelle le tuyau (4) comprend au moins un moyen d'obturation (38) du au moins un orifice d'évacuation (32), le moyen d'obturation (38) étant mobile le long de la direction longitudinale (L) du tuyau (4).

3. Machine de soufflage (1) selon l'une quelconque des revendications précédentes, dans laquelle l'orifice d'évacuation (32) présente une section de passage (S) inférieure ou égale à 5mm.

4. Machine de soufflage (1) selon l'une quelconque des revendications précédentes, dans laquelle un dispositif de filtration (34) est disposé en recouvrement de l'au moins un orifice d'évacuation (32).

5. Machine de soufflage (1) selon la revendication précédente, dans laquelle le dispositif de filtration (34) est une grille (34) disposée contre la paroi cylindrique (20).

6. Machine de soufflage (1) selon l'une quelconque des revendications 4 ou 5, dans laquelle le dispositif de filtration (34) est disposé dans un espace (22) délimité au sein de la paroi cylindrique (20).

7. Machine de soufflage (1) selon l'une quelconque des revendications précédentes, dans laquelle l'au moins un orifice d'évacuation (32) est plus proche de la deuxième extrémité (30) du tuyau (4) que de la première extrémité (26).

8. Machine de soufflage (1) selon l'une quelconque des revendications précédentes, comprenant une pluralité d'orifices d'évacuation (32), les orifices d'évacuation (32) étant regroupés sur un tronçon (40) du tuyau (4) apte à être obturé en intégralité par le moyen d'obturation (38).

9. Machine de soufflage (1) selon l'une quelconque des revendications précédentes, dans laquelle la base (2) comprend un canal de circulation d'air (10) et un canal de circulation du produit isolant (12) en vrac respectivement connecté à l'entrée d'air (6) et à l'entrée du produit isolant (8) en vrac, le canal de circulation d'air (10) et le canal de circulation du produit isolant (12) en vrac étant en communication fluidique avec la première ouverture (24) du tuyau (4).

10. Machine de soufflage (1) selon la revendication précédente, dans laquelle un organe de contrôle du débit (18) est positionné entre les canaux de circulation (10, 12) et la première ouverture (24) du tuyau (4).

11. Procédé d'isolation d'une zone à isoler dans lequel un produit isolant en vrac est soufflé par une machine de soufflage (1) selon l'une quelconque des revendications précédentes.

12. Procédé d'isolation selon la revendication précédente, au cours duquel la base (2) de la machine de soufflage (1) est alimentée en air dans une première étape, via l'entrée d'air (6) et à un débit donné, l'air étant mélangé au produit isolant (8) en vrac au cours d'étapes ultérieures pour circuler ensemble dans le tuyau (4) en direction de la deuxième ouverture (28) de celui-ci, l'utilisateur étant apte à configurer l'orifice d'évacuation d'air (32) pour évacuer une quantité donnée d'air entre la base (2) et la deuxième ouverture (28).
